# EUROPEAN PATENT APPLICATION

(11) **EP 2 814 234 A1**
(43) Date of publication of application: **17.12.2014**
(21) Application number: 13171360.4
(22) Date of filing: 11.06.2013
(51) Int. Cl.: H04N 5/225, H04N 5/232

(54) **Apparatus for controlling camera modes and associated methods**

(71) Applicant: Nokia Corporation, 02610 Espoo (FI)
(72) Inventor: Viljamaa, Timo-Pekka, 00530 Helsinki (FI); Jansky, Martin, 02620 Espoo (FI)
(74) Representative: Nokia Corporation

(57) **Abstract**

An apparatus comprising:
a processor; and
a memory including computer program code,
the memory and the computer program code configured, with the processor, to cause the apparatus to perform at least the following:
control the mode of at least one camera of a portable electronic device based on a determined user's grip of the portable electronic device.

## Description

### Technical Field

The present disclosure relates to user interfaces, associated methods, computer programs and apparatus. Certain disclosed aspects/embodiments relate to portable electronic devices, in particular, so-called hand-portable electronic devices which may be hand-held in use (although they may be placed in a cradle in use). Such hand-portable electronic devices include so-called Personal Digital Assistants (PDAs), mobile telephones, smartphones and other smart devices, and tablet PCs.

The portable electronic devices/apparatus according to one or more disclosed aspects/embodiments may provide one or more audio/text/video communication functions (e.g. tele-communication, video-communication, and/or text transmission (Short Message Service (SMS)/Multimedia Message Service (MMS)/emailing) functions), interactive/non-interactive viewing functions (e.g. web-browsing, navigation, TV/program viewing functions), music recording/playing functions (e.g. MP3 or other format and/or (FM/AM) radio broadcast recording/playing), downloading/sending of data functions, image capture function (e.g. using a (e.g. in-built) digital camera), and gaming functions.

### Background

Certain portable electronic devices are provided with cameras which can be used in different ways. For example, some digital cameras allow images or video to be captured. Some mobile phones have a front-facing camera (e.g. to allow for video calls or for capture of a photo of the user) and a rear-facing camera (e.g. to allow the user to take photos or video).

The listing or discussion of a prior-published document or any background in this specification should not necessarily be taken as an acknowledgement that the document or background is part of the state of the art or is common general knowledge. One or more aspects/embodiments of the present disclosure may or may not address one or more of the background issues.

### Summary

In a first aspect, there is provided an apparatus comprising:
a processor; and
a memory including computer program code,
the memory and the computer program code configured, with the processor, to cause the apparatus to perform at least the following:
   control the mode of at least one camera of a portable electronic device based on a determined user's grip of the portable electronic device.

Using the user's grip to control the mode of at least one camera may provide a user with an intuitive and simple way of controlling the electronic device. It may be natural for a user to hold the portable electronic device in a particular grip in order to take a photograph. Similarly, the user may grip a device to cover a camera to pause/mute a video call.

It may be advantageous for a user to control camera functionality simply by using a particular grip on the portable electronic device. For example, by using a user's grip as an input to the apparatus to control camera functionality, the user need not, for example, interact with a user interface element of a touch screen of a smartphone during a video chat conversation to change the mute settings, as a simple change of grip can be used to change the video settings. Further, for example, the user need not touch a camera user interface element to start or stop image/video capture.

The apparatus may be configured to use the determined user's grip to control currently active camera functionality provided using the portable electronic device. Thus the apparatus may be configured to allow the mode of the camera to be changed (e.g. in response to a change in determined grip) during image/video capture. The apparatus may be configured to use the determined user's grip to initiate functionality provided using the portable electronic device. For example, in response to detecting a particular grip, the apparatus/device may activate a camera for image capture.

The user grip may be related to the particular positioning of at least one of the user's hand, palm, fingers and thumb when the user is holding the device with at least a part of their hand. The apparatus uses the determined user grip, for example by using the determined detected shape of the user hand or hands, and the positioning of at least one of each finger and thumb in relation to the device, on the surface of the apparatus/device or in 3D around the proximity of the apparatus/device. Given that this is a user grip, there is a degree of holding the device.

The apparatus may be configured to use the determined user's grip to switch between a plurality of cameras of the portable electronic device. That is, switching between the plurality of cameras may comprise toggling between generating/receiving data using a first camera and generating/receiving data using a second camera.

The apparatus may be configured to use the determined user's grip to switch between a front-facing camera and a rear-facing camera of the portable electronic device or between front and rear-facing image capture modes of the camera.

The portable electronic device may have other arrangements of cameras. For example, some embodiments may be configured to control cameras on the sides of the portable electronic device. Other portable electronic device may have multiple front-facing cameras and/or multiple rear-facing cameras.

The user's grip of a portable electronic device may be one or more of:
a user's grip at an end portion of the portable electronic device;
a user's hands each gripping an end portion of the portable electronic device;
a user's hand gripping a central portion of the portable electronic device;
a user's hand gripping the portable electronic device in a vertical grip;
a single handed grip;
a two handed grip
a portrait grip;
a landscape grip;
a front grip; and
a rear grip.

A rear grip may be considered to be a grip where the palms of the hand are towards the front of the device and/or where the fingers extend towards the rear of the device. A rear grip may leave the rear surface of the device open (e.g. relative to the front surface of the device). A front grip may be considered to be a grip where the palms of the hand are towards the rear of the device and/or where the fingers extend towards the front of the device. A front grip may leave the front surface of the device open (e.g. relative to the front surface of the device). It will be appreciated that the apparatus/device may be configured to detect different aspects of different grips (e.g. one example embodiment may be configured to base the determination on the position of fingers, whereas other embodiments may be configured to use the position of the thumbs and or palms). It will be appreciated that other grips and categories of grips may be used by some embodiments to control the mode of at least one camera.

The particular position of the user's grip of a portable electronic device may be one or more of: a user's grip at an end portion of the portable electronic device; a user's hands each gripping an end portion of the portable electronic device; a user's hand gripping a central portion of the portable electronic device and a user's hand gripping the portable electronic device in a vertical grip. Different grip positions may be associated with different modes of the one or more cameras.

The particular position of the user's grip of a portable electronic device may be one or more of: a grip proximal to a camera of the portable electronic device; and a grip proximal to a display of the portable electronic device. The user need not necessarily touch the input/output device or physically cover it/block it, because it is the detected user grip such as the finger placement on the device which is used as input to control mode of the camera.

The apparatus may be configured to use a determined user's grip over a front face of the portable electronic device as the user input to control the mode of the at least one camera. The front face may be one or more of a face presented to a user for outputting images from the one or more cameras (such as a face including a display screen for video output), a face comprising a data output device (such as a face comprising a display screen for visual output or a speaker for audio output), a face comprising a data input device (such as a face comprising a touch-sensitive display for user touch input), and a face presented to the user during normal use of the portable electronic device. For example, a user may normally use a smartphone with the display screen facing the user. A rear face may be a face which is orientated to face the opposite direction to the front face (e.g. directed away from the user when the front face is directed towards the user during a voice call, for example).

The mode of said camera may be a portrait or landscape mode of image capture, and the determined grip controls whether the image captured by the camera is a portrait image or a landscape image. A portrait orientation may be considered to be an orientation wherein the long edge of a display is arranged to be vertical, or where the long edge is arranged to be upright (defined with respect to the user). A landscape orientation may be considered to be an orientation wherein the short edge of a display is arranged to be vertical, or where the short edge is arranged to be upright (defined with respect to the user).

The mode of a said camera may prescribe whether the camera is on, off, or paused such that the determined grip controls turning the camera on or off or pausing the camera.

The mode of a said camera may prescribe at least one of the orientation and the position of user interface elements in a camera application used to interact with a said camera of the portable electronic device. This may provide a more intuitive user interface as the orientation and/or position of the user interface elements will be adjusted with reference to the user via the determined grip (rather than, for example, the absolute orientation of the device itself). This may be provide for more robust orientation determination, for example, when the user is using the device lying down, or when the device has been placed on a flat surface. For example, if the portable electronic device is lying flat on a horizontal surface (such as a table top) a gravimetric sensor may not be able to determine whether the portable electronic device should be in landscape or portrait mode. However, an embodiment configured to use a determined grip to control the mode of the camera may allow the user to intuitively select a portrait or landscape mode by appropriately gripping the device.

It will be appreciated that adjusting the position of the user interface elements based on a determined grip may allow for more intuitive user interfaces for left handed users. For example, if the user was griping the phone to interact with user interface elements using their left hand, the user interface elements may be positioned to allow easier access with the left hand.

The mode of the camera may determine the way image data is processed and/or captured. For example, a video mode may enable the capture of video data. A still capture mode may enable the capture of still images.

The apparatus may be configured:
to enable a rear-facing camera mode in response to determining that the user's grip of the portable electronic device is a rear grip; and
to enable a front-facing camera mode in response to determining that the user's grip of the portable electronic device is a front grip.

The apparatus may be configured:
to enable a rear-facing camera mode in response to determining that the user's grip of the portable electronic device is a two-handed grip; and
to enable a front-facing camera mode in response to determining that the user's grip of the portable electronic device is a one-handed grip.

The apparatus may be configured:
to re-position one or more user interface elements on a display such that the user interface elements are not obscured by the determined user's grip.

The user's grip may be determined using one or more of:
a 3-D capacitive sensing user interface;
a pressure detecting user interface; and
a touch sensitive user interface.

The user's grip may be determined using one or more of a 3-D capacitive sensing user interface, a pressure detecting user interface, a touch sensitive user interface, a camera, a proximity sensor, an ambient light sensor and a pressure sensor, for example. A 3-D capacitive sensing user interface may be used to determine/map the position of the user's hand gripping the apparatus (or a device comprising the apparatus). This may involve detecting the user's hand, including detecting the position of individual gripping fingers, thumb and palm up to a particular distance away from the apparatus (for example up to 3cm away). Detection of the user's hand/grip may include detection at the sides/edges and the back of the user interface.

A pressure detecting user interface may include, for example, a pressure sensitive border around the edge of a portable electronic device configured to detect the presence of a user's fingers and thumb at particular locations around the border. A touch sensitive user interface may comprise a layer around the back and sides of a portable electronic device which is sensitive to contact with human skin, for example. A pressure sensor may be configured to determine the pressure with which the user applies a grip. Different pressures may be associated with different data streaming control. For example, a light/lower pressure grip may provide a "mute audio input" input, and a strong/higher pressure grip may provide a "mute audio input and video input" input to an apparatus/device.

Grip detection may in certain examples by performed substantially using one sensing device, such as via a 3-D capacitive sensing user interface, and may be assisted by one or more other sensors, such as a camera or pressure sensor, for example. An example of using a combination of sensing elements may be to use a touch sensitive layer around the front, back and sides of the apparatus/device, and a pressure-sensitive layer around the sides of the device.

The apparatus may be configured, in response to determining that the user's grip obscures at least one camera (e.g. covers or obscured the camera viewfinder) and leaves at least one camera uncovered, to activate a said uncovered camera. In certain cases, the apparatus may be configured such that the covered/obscured camera is deactivated if it is already activated. The apparatus may be configured to turn off/pause image capture using a camera if the user's grip is determined to obscure/cover the camera.

The apparatus may be configured to allow a user of the portable electronic device to calibrate the apparatus by:
storing one or more user grip positions on the portable electronic device; and
associating a particular user grip position with a mode of a said camera.

These grip positions may be preset specific user grip positions, or variable user grip position which can be specifically set by the user. The latter case will allow the user to use grips which he himself can devise and which do not need to conform to pre-set specific positions. That is, the user may create their own particular grips and store them in association with a particular camera mode, such that when the user holds the camera with that grip, the corresponding camera mode is enabled.

The camera mode may prescribe which particular camera application is used to interact with a said camera.

A camera application may comprise a photo capture application, a movie capture application, an augmented reality viewer, a game, a video communication application or a navigation application.

The camera mode may prescribe the zoom factor of the camera.

The apparatus may be configured to provide an indication of the mode of the camera controlled by the determined user's grip, the indication comprising one or more of a visual indicator, an audio indicator and a tactile indicator.

The apparatus may be configured to determine the user's grip.

The portable electronic device may comprise a said camera of the portable electronic device. A said camera of the portable electronic device may be an external camera which is connected to the portable electronic device (e.g. via a network or a cable) to allow control of the camera via the portable electronic device.

The apparatus may be the portable electronic device, a mobile telephone, a personal digital assistant, a tablet computer, a desktop computer, an e-book, a personal media player, a server, a microphone, a speaker, a server, a display, a camera, or a module for one or more of the same.

The portable electronic device may comprise one or more of:
a mobile telephone; a smartphone, a personal digital assistant, a camera, a video camera, a navigator, a media player, a tablet computer, a remote controller, and a clock.

According to a further aspect, there is provided a computer program comprising computer program code configured to:
control the mode of at least one camera of a portable electronic device based on a determined user's grip of the portable electronic device.

A computer program may be stored on a storage media (e.g. on a CD, a DVD, a memory stick or other non-transitory medium). A computer program may be configured to run on a device or apparatus as an application. An application may be run by a device or apparatus via an operating system. A computer program may form part of a computer program product.

According to a further aspect, there is provided a method comprising:
controlling the mode of at least one camera of a portable electronic device based on a determined user's grip of the portable electronic device.

According to a further aspect, there is provided an apparatus comprising:
means for controlling configured to control the mode of at least one camera of a portable electronic device based on a determined user's grip of the portable electronic device.

According to a further aspect, there is provided an apparatus comprising:
a controller configured to control the mode of at least one camera of a portable electronic device based on a determined user's grip of the portable electronic device.

The present disclosure includes one or more corresponding aspects, embodiments or features in isolation or in various combinations whether or not specifically stated (including claimed) in that combination or in isolation. Corresponding means and corresponding function units (e.g. a user grip determiner, a camera mode controller) for performing one or more of the discussed functions are also within the present disclosure.

Corresponding computer programs for implementing one or more of the methods disclosed are also within the present disclosure and encompassed by one or more of the described embodiments.

The above summary is intended to be merely exemplary and non-limiting.

### Brief Description of the Figures

A description is now given, by way of example only, with reference to the accompanying drawings, in which:
figure 1 illustrates an example apparatus comprising a number of electronic components, including memory and a processor according to an embodiment disclosed herein;
figure 2 illustrates an example apparatus comprising a number of electronic components, including memory, a processor and a communication unit according to another embodiment disclosed herein;
figure 3 illustrates an example apparatus comprising a number of electronic components, including memory, a processor and a communication unit according to another embodiment disclosed herein;
figures 4a-4d illustrate a first embodiment configured to activate different camera modes based on the respective determined grip;
figures 5a-5g illustrate a further embodiment configured to switch between different camera modes based on the respective determined grip;
figures 6a-6f illustrate a first embodiment configured to control the camera modes based on the respective determined grip;
figures 7a-7b illustrate an example apparatus in communication with a remote server/cloud according to another embodiment disclosed herein;
figure 8 depicts a method according to an example embodiment; and
figure 9 illustrates schematically a computer readable medium providing a program.

### Description of Example Aspects/Embodiments

Certain portable electronic devices provide one or more camera functionalities. An example is of a mobile telephone which is used to make video calls and to take photographs.

Generally, such a portable electronic interface is provided with a graphical user interface to control the various functionalities. For example, the user may navigate through a menu or interact with icons in order to select whether, for example, the video call function is to be activated or the photograph function. This may require an extensive menu system or a large number of icons, particularly in embodiments with a large number of camera options.

Examples disclosed herein may be considered to provide a solution to one or more of the abovementioned issues by providing an apparatus configured to control the mode of at least one camera of a portable electronic device based on a determined user's grip of the portable electronic device. By using a detected user grip (for example using the detected positions of one or more of the user's fingers, thumb and palm in relation to the detecting sensors/user interface of the portable electronic device) a user input can be provided which is natural and intuitive for the user to perform and which does not necessarily require the user to break his concentration by, for example, following on-screen buttons or on-screen instructions to provide a desired input.

In addition, most users hold portable electronic devices in a particular way when performing particular tasks. For example, when taking a still image using a rear-facing camera, most users will use a two-handed landscape rear grip. Therefore, when this grip is adopted, it may be assumed that the user wishes to take a still photograph. Therefore, the camera can be configured in a still photo camera mode (e.g. by opening a photo camera application and providing a landscape user interface) without the user having to navigate to that mode manually using user interface elements/menu of a camera application. Of course, it will be appreciated that, for example, a user who tends to use unusual grips for particular tasks may, with certain example embodiments, associate a particular grip with a particular mode of a camera so that, when the particular grip is adopted subsequently, the correct camera mode is activated.

Furthermore, in some example embodiments, the user's grip may be detected even if the user is wearing gloves (for example using 3-D capacitive sensing) so that, for example, the user can provide input without being required to remove a glove to interact with a touch-sensitive screen. The user's grip at different locations on the portable electronic device may be associated with different user inputs, adding to the intuitive nature of using the user grip as an input. For example, holding a smartphone device to cover one camera may be natural for a user wishing to turn off that camera input.

Other examples depicted in the figures have been provided with reference numerals that correspond to similar features of earlier described examples. For example, feature number 101 can also correspond to numbers 201, 301 etc. These numbered features may appear in the figures but may not have been directly referred to within the description of these particular examples. These have still been provided in the figures to aid understanding of the further examples, particularly in relation to the features of similar earlier described examples.

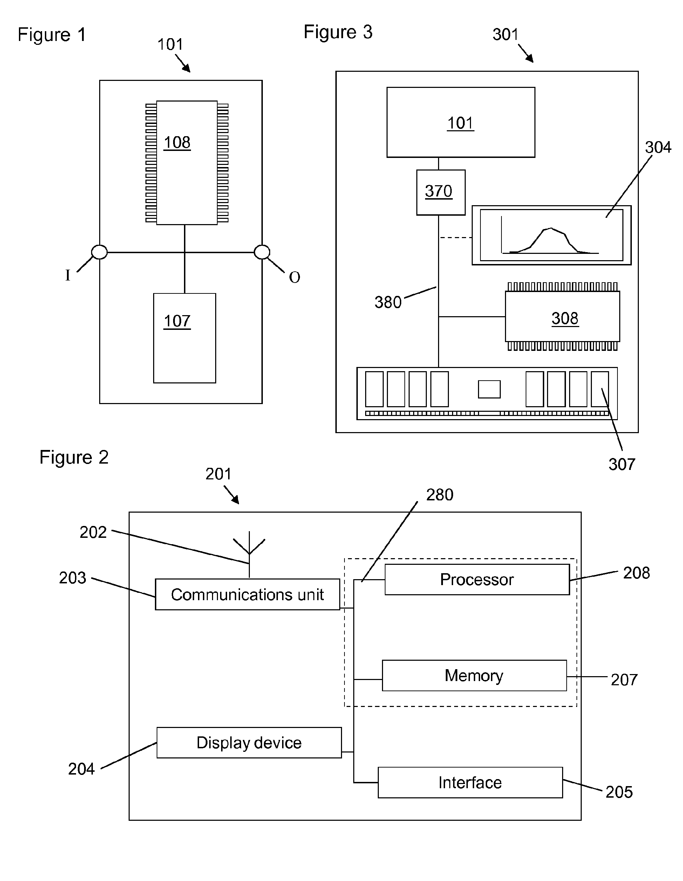

Figure 1 shows an apparatus 101 comprising memory 107, a processor 108, input I and output O. In this embodiment only one processor and one memory are shown but it will be appreciated that other embodiments may utilise more than one processor and/or more than one memory (e.g. same or different processor/memory types).

In this embodiment the apparatus 101 is an Application Specific Integrated Circuit (ASIC) for a portable electronic device with a touch sensitive display. In other embodiments the apparatus 101 can be a module for such a device, or may be the device itself, wherein the processor 108 is a general purpose CPU of the device and the memory 107 is general purpose memory comprised by the device.

The input I allows for receipt of signalling to the apparatus 101 from further components, such as components of a portable electronic device (like a touch-sensitive display) or the like. The output O allows for onward provision of signalling from within the apparatus 101 to further components such as a display screen. In this embodiment the input I and output O are part of a connection bus that allows for connection of the apparatus 101 to further components.

The processor 108 is a general purpose processor dedicated to executing/processing information received via the input I in accordance with instructions stored in the form of computer program code on the memory 107. The output signalling generated by such operations from the processor 108 is provided onwards to further components via the output O.

The memory 107 (not necessarily a single memory unit) is a computer readable medium (solid state memory in this example, but may be other types of memory such as a hard drive, ROM, RAM, Flash or the like) that stores computer program code. This computer program code stores instructions that are executable by the processor 108, when the program code is run on the processor 108. The internal connections between the memory 107 and the processor 108 can be understood to, in one or more example embodiments, provide an active coupling between the processor 108 and the memory 107 to allow the processor 108 to access the computer program code stored on the memory 107.

In this example the input I, output O, processor 108 and memory 107 are all electrically connected to one another internally to allow for electrical communication between the respective components I, O, 107, 108. In this example the components are all located proximate to one another so as to be formed together as an ASIC, in other words, so as to be integrated together as a single chip/circuit that can be installed into an electronic device. In other examples one or more or all of the components may be located separately from one another.

Figure 2 depicts an apparatus 201 of a further example embodiment, such as a mobile phone. In other example embodiments, the apparatus 201 may comprise a module for a mobile phone (or other portable electronic device), and may just comprise a suitably configured memory 207 and processor 208. The apparatus in certain embodiments could be a portable electronic device, a laptop computer, a mobile phone, a Smartphone, a tablet computer, a personal digital assistant, a digital camera, a navigator, a server, a non-portable electronic device, a desktop computer, a monitor, or a module/circuitry for one or more of the same.

The example embodiment of figure 2, in this case, comprises a display device 204 such as, for example, a Liquid Crystal Display (LCD), e-Ink or touch-screen user interface. The display device 204 may be a bendable, foldable, and/or rollable flexible display. The display device 204 may be curved (for example as a flexible display screen or as a rigid curved glass/plastic display screen). The display device 204 (and/or the device 201) may be any shape, such as rectangular, square, round, star-shaped or another shape. A device such as device 201 configured for touch user input may be configured to receive touch input via a touch detected on a touch-sensitive screen, on a separate touch-sensitive panel, or on a touch sensitive front window/screen integrated into the device 201, for example. A touch-sensitive element may be any shape, and may be larger than a display screen of the apparatus/device in some examples. For example, a touch sensitive membrane/layer may be located over the display screen, around the edges of the device 201 and possibly around the back of the device 201. A touch sensitive membrane/layer may include holes, for example to be located over a speaker, camera or microphone of the device so as not to block/cover these input/output devices.

The apparatus 201 of figure 2 is configured such that it may receive, include, and/or otherwise access data. For example, this example embodiment 201 comprises a communications unit 203, such as a receiver, transmitter, and/or transceiver, in communication with an antenna 202 for connecting to a wireless network and/or a port (not shown) for accepting a physical connection to a network, such that data may be received via one or more types of networks. This example embodiment comprises a memory 207 that stores data, possibly after being received via antenna 202 or port or after being generated at the user interface 205. The processor 208 may receive data from the user interface 205, from the memory 207, or from the communication unit 203. It will be appreciated that, in certain example embodiments, the display device 204 may incorporate the user interface 205. Regardless of the origin of the data, these data may be outputted to a user of apparatus 201 via the display device 204, and/or any other output devices provided with apparatus. The processor 208 may also store the data for later use in the memory 207. The memory 207 may store computer program code and/or applications which may be used to instruct/enable the processor 208 to perform functions (e.g. read, write, delete, edit or process data).

In this embodiment, respective front/rear facing cameras are integrated with the user interface 205. In other embodiments, respective front/rear cameras may be separate from the interface 205 (but, if required, connected to the user interface 205). It will be appreciated that other example embodiments may comprise a single camera.

Figure 3 depicts a further example embodiment of an electronic device 301, such as a mobile phone, a portable electronic device, a portable telecommunications device, a server or a module for such a device, the device comprising the apparatus 101 of figure 1. The apparatus 101 can be provided as a module for device 301, or even as a processor/memory for the device 301 or a processor/memory for a module for such a device 301. The device 301 comprises a processor 308 and a storage medium 307, which are connected (e.g. electrically and/or wirelessly) by a data bus 380. This data bus 380 can provide an active coupling between the processor 308 and the storage medium 307 to allow the processor 308 to access the computer program code. It will be appreciated that the components (e.g. memory, processor) of the device/apparatus may be linked via cloud computing architecture. For example, the storage device may be a remote server accessed via the internet by the processor.

The apparatus 101 in figure 3 is connected (e.g. electrically and/or wirelessly) to an input/output interface 370 that receives the output from the apparatus 101 and transmits this to the device 301 via data bus 380. Interface 370 can be connected via the data bus 380 to a display 304 (touch-sensitive or otherwise) that provides information from the apparatus 101 to a user. Display 304 can be part of the device 301 or can be separate. The device 301 also comprises a processor 308 configured for general control of the apparatus 101 as well as the device 301 by providing signalling to, and receiving signalling from, other device components to manage their operation.

Again, the camera(s) may be integrated with the apparatus 101, with the device 301, or be separately connected to the apparatus 101 via the input/output interface 370, for example.

The storage medium 307 is configured to store computer code configured to perform, control or enable the operation of the apparatus 101. The storage medium 307 may be configured to store settings for the other device components. The processor 308 may access the storage medium 307 to retrieve the component settings in order to manage the operation of the other device components. The storage medium 307 may be a temporary storage medium such as a volatile random access memory. The storage medium 307 may also be a permanent storage medium such as a hard disk drive, a flash memory, a remote server (such as cloud storage) or a non-volatile random access memory. The storage medium 307 could be composed of different combinations of the same or different memory types.

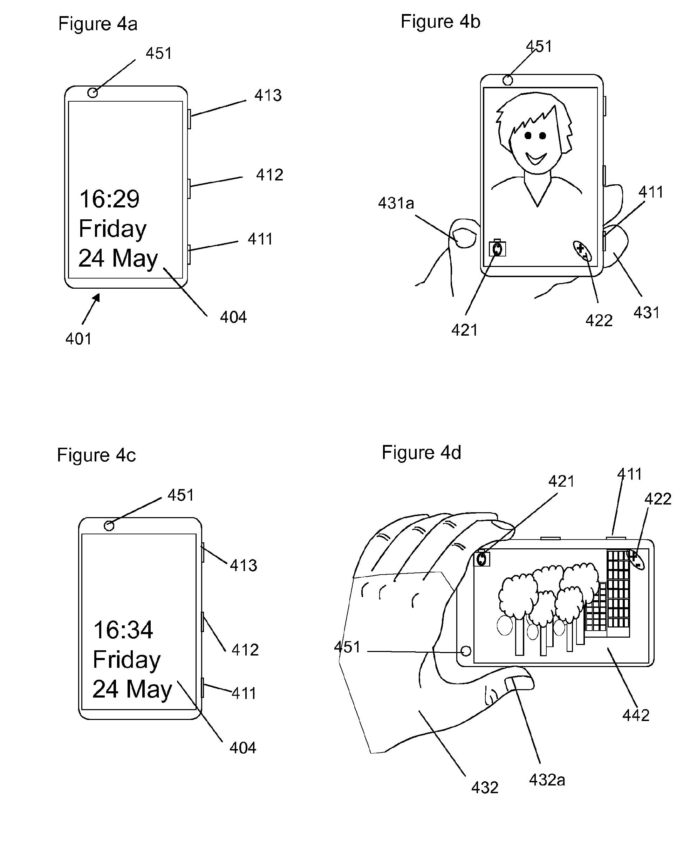

Figures 4a-4d illustrate an example of a portable electronic device 401 such as a mobile telephone or smartphone. The portable electronic device 401 may be the apparatus or may comprise the apparatus. In figure 4a, the user is not holding the device, and the device is in a locked mode. The device, in this case, comprises, a front-facing camera 451 (configured to capture images of the user when the user is looking at the device display screen) and a rear-facing camera (not shown) (configured such that the lens faces away from the user when the user is looking at the device display screen). The user interface of the device, in this case, comprises a touch screen display 404 and three physical buttons including: a volume control 413; an on/off button 412; and a camera button 411. In addition, to determine the user's grip of the portable electronic device 401, the portable electronic device 401 comprises pressure sensors on the sides and on the front and back surfaces of the device.

In this case, the user wishes to unlock the device 401 in order to use a camera function. In particular, the user wishes to check that his hair has not been too tangled by the wind. Therefore the user wishes to use the front-facing camera to capture a live image 441 of himself for display on the screen 404. In this case, the apparatus/device 401 is configured to initiate camera functionality from the locked mode of the device in response to the user pressing the camera physical button 411. In this case, the user of the device presses the camera physical button 411 (or shortcut key) and holds the device 401 in a front one-handed portrait grip 431. This is shown in figure 4b. It will be appreciated that the apparatus/device may be configured to initiate camera functionality (e.g. particular camera modes) from other modes of the device (e.g. a general unlocked mode) in response to the user pressing the camera physical button 411.

In this case, the apparatus/device is configured to control the mode of at least one camera of a portable electronic device based on a determined user's grip of the portable electronic device. In this case, the mode of the camera prescribes which of the front and rear cameras are on and which are off; whether the image captured is a portrait or a landscape image; and the orientation and the position of the user interface elements in a camera application used to interact with a said camera of the portable electronic device 401.

In this case, the apparatus/device determines that the user's grip 431 is a front grip by detecting pressure on the sides and on the back of the device. The device/apparatus is further configured to determine that it is a one-handed portrait grip by detecting that the thumb 431a of the left hand is pointing towards the top of the electronic device 401 (top and bottom being defined when the device is in portrait mode, in this case). That is, when a user grips (or holds) a portable electronic device with his left hand in portrait mode, the thumb 431a generally points upwards along the side of the electronic device.

The particular camera mode which is activated is, in this case, based on the determined grip. In this case, the particular camera mode activated is based on one or more of the number of hands used in the grip, whether the grip is a front or rear grip; and whether the device is held in a portrait or a landscape grip. In particular, in response to the user's grip being determined to be a front grip (i.e. a normal grip which allows the user to see the screen), the apparatus/device is configured to initiate the front-facing camera 451 (i.e. to initiate a front-facing camera mode). In response to determining that the device is in a portrait grip, the device is configured to initiate the camera (the front-facing camera 451 in this case) in portrait mode. This means that the icons displayed (e.g. the capture image 421 and zoom controls 422) are configured to appear upright to the user. The device 401, in this mode, is configured to display a live feed of images 441 from the front-facing camera 451. After checking his appearance, the device returns to the locked screen as shown in figure 4c.

Then the user decides to take a photograph of some trees and buildings using the rear-facing camera (not shown as located on the face opposite the display screen 404). As noted above, the apparatus/device is configured to initiate camera functions from the locked screen in response to the user pressing the camera physical button. In this case, to take the photo, the user of the device presses the camera physical button 411 and holds the device in a rear one-handed landscape grip 432. This is shown in figure 4d.

In this case, the apparatus/device determines that the user's grip is a rearward grip by detecting pressure on the sides and on the front of the device. The device/apparatus is further configured to determine that it is a one-handed landscape grip by detecting that the thumb of the left hand 432a is placed points towards the bottom of the electronic device (top and bottom being defined when the device is in portrait mode, in this case). That is, in contrast to the portrait grip of figure 4b, where the thumb of the left hand points towards the top of the device, in the landscape grip of figure 4d, the thumb of the left hand points towards the bottom on the device 401. It will be appreciated that the difference between a right-handed portrait grip and a right-handed landscape grip may relate to the side on which the thumb is placed rather than the direction in which the thumb points.

The particular camera mode which is activated is, in this case, based on the determined grip. In this case, the mode is activated based on the number of hands used in the grip, whether the grip is a front or rear grip; and whether the device is held in a portrait or a landscape grip. In particular, in response to the user's grip 432 being a rear grip, the apparatus/device is configured to initiate the rear-facing camera (not shown). In response to determining that the device is in a landscape grip, the device is configured to initiate the camera (the rear-facing camera in this case) in portrait mode. This means that the icons displayed (e.g. the capture image 421 and zoom controls 422) are configured to appear upright to the user. When the rear camera is active in portrait mode a live feed of images 442 captured by the rear camera are displayed on the screen of the portable electronic device. The user can use the icons to capture the desired image from this live feed of images 442 displayed on the display of device 404. It will be appreciated that other camera modes may allow the user to capture video footage.

In this case, it is the detected user's grip, including the shape of the hand and contact of the different parts of the hand (fingers/thumb) to the pressure sensors which determine the particular user's grip. It will be appreciated that other example embodiments may also be configured to sense hover interaction. That is, in addition to detecting contact on the surface of the portable electronic device, some embodiments may be configured to detect non-touching elements of the user's hand which is holding the device. For example, covering the lower part of the display of a device using a palm with a thumb at one edge and fingers at another edge of the device, but not touching the display screen, may be detected as one particular user grip. Covering the lower part of the display of a device in a different way, by placing a thumb at the back of the device and placing the fingers flat against the display of the device to grip the device may be detected as a different particular user grip, even though both user grips cover substantially the same portion of the display of the device.

It will be appreciated that by adjusting which camera is initiated and how the camera is initiated based on the determined grip, the user need not navigate a (e.g. complex) menu structure to obtain the desired functionality. That is, when the pressure (or hover interaction) is detected on the rear of the device (e.g. indicating that part of the hand holding the device is at the rear of the device), it may be assumed that the user wishes to use the front-facing camera. Likewise, when pressure (or hover interaction) is detected on the front of the device (e.g. indicating that part of the hand holding the device is at the front of the device), it may be assumed that the user wishes to use the rear-facing camera. It will be appreciated, that other example embodiments may be configured to determine whether the user is using a front or rear grip to hold the device in different ways. For example, the grip may be determined based on whether the front or rear camera is obscured. For example, if the rear camera was obscured and the front camera was not obscured, the apparatus/device may determine that the user was using a front grip and that the front camera should be initiated.

It will be appreciated that in some example embodiments, the camera may be directly accessible in response to detecting a particular user grip. For example, some example embodiments may be configured to directly activate a particular camera mode from a locked mode (or an unlocked mode such as when a home screen or application screen is being displayed) in response a particular grip being detected without the user having to provide separate inputs (such as selecting icons or providing particular gestures) to unlock the device or activate a camera application.

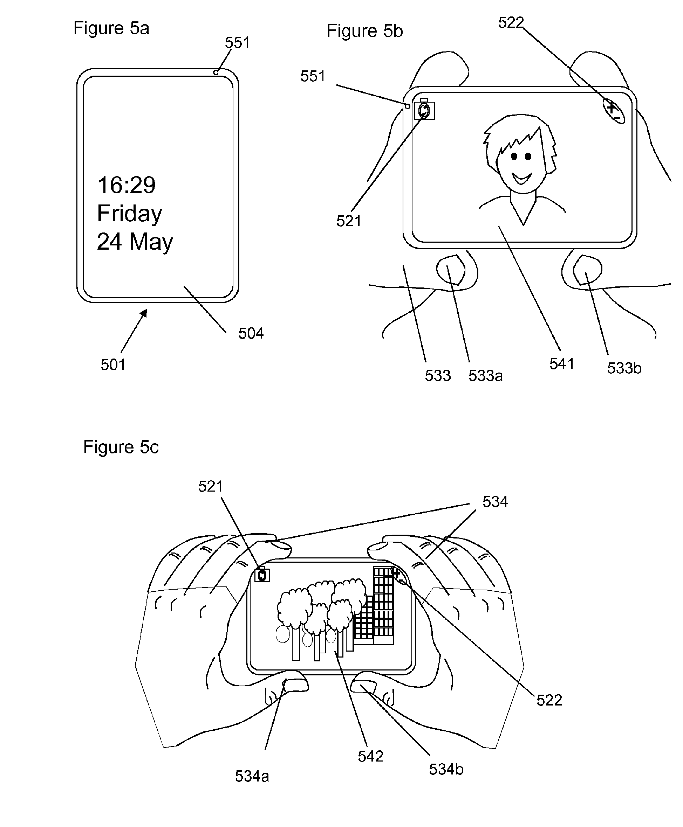

Figures 5a-5d illustrate a further example of a portable electronic device 501 such as a smartphone. The portable electronic device 501 may be the apparatus or may comprise the apparatus. In figure 5a, the user is not holding the device, and the device is in a locked mode. The device, in this case, comprises, a front-facing camera 551 (configured to capture images of the user when the user is looking at the device display screen) and a rear-facing camera (not shown as it is configured such that the lens faces away from the user when the user is looking at the device display screen). In addition, to determine the user's grip of the portable electronic device 401, the portable electronic device 401 comprises pressure sensors on the sides and on the back surface of the device, and a capacitive hover (and contact) sensor on the display surface of the device. In this case, the embodiment is configured to allow the user to switch between the front-facing camera 551 and the rear-facing camera.

In this case, the user initially wishes to unlock the device 501 in order to use a camera function to take a photo of himself to send to his friends.

In this case, the apparatus/device 501 is configured to control the mode of at least one camera of a portable electronic device based on a determined user's grip of the portable electronic device 501.

The user therefore initiates the camera function (e.g. using a shortcut key or a user interface element) and holds the device in a two-handed landscape front grip 533 (shown in figure 5b). In this case, the apparatus/device determines that the user's grip 533 is a front grip by detecting pressure on the sides and on the back of the device. The device/apparatus is further configured to determine that it is a two-handed landscape grip by detecting that the left-hand thumb 533a and the right-hand thumb 533b are placed on the same side of the device but at opposite ends.

The particular camera mode which is activated is, in this case, based on the determined grip. In this case, the particular camera mode activated is based on whether the grip is one or more of a front or rear grip; whether the grip is one-handed or two-handed; and whether the device is held in a portrait or a landscape grip. In particular, in response to the determined user's grip 533 being a front grip (i.e. a normal grip which allows the user to see the screen), the apparatus/device is configured to initiate a front-facing camera mode. In response to determining that the device is in a landscape grip, the apparatus/device is configured to initiate the camera (the front-facing camera 551 in this case) in a landscape camera mode. This means that the displayed icons (e.g. the capture image and zoom controls) are configured to appear upright to the user.

The user then decides to take a photo of the scenery to send to his friends. The user therefore changes his grip in order to hold the device in a two-handed landscape rear grip 534 (shown in figure 5c). In this case, the apparatus/device determines that the user's grip 534 is a rear grip by detecting contact on the sides (e.g. using pressure sensors) and detecting the palms hovering over the front of the device (e.g. using capacitive hover sensors). The device/apparatus is further configured to determine that it is a two-handed landscape grip by detecting that the left-hand thumb 534a and the right hand thumb 534b are placed on the same side of the portable electronic device 501 but at opposite ends.

As noted above, the particular camera mode which is activated is, in this case, based on the determined grip. In this case, the mode is activated based on the number of hands used in the grip, whether the grip is a front or rear grip; and whether the device is held in a portrait or a landscape grip. In particular, in response to the determined user's grip being a rear grip (i.e. a reverse grip where the hands are on the same side as the screen), the apparatus/device is configured to switch from the front-facing camera to the rear-facing camera. In response to determining that the device is in a landscape grip, the device is configured to initiate the rear-facing camera in landscape mode. This means that the icons displayed (e.g. the capture image and zoom controls) are configured to appear upright to the user. In this way, the user can change the mode from a first camera mode to a second camera mode by changing his grip on the portable electronic device.

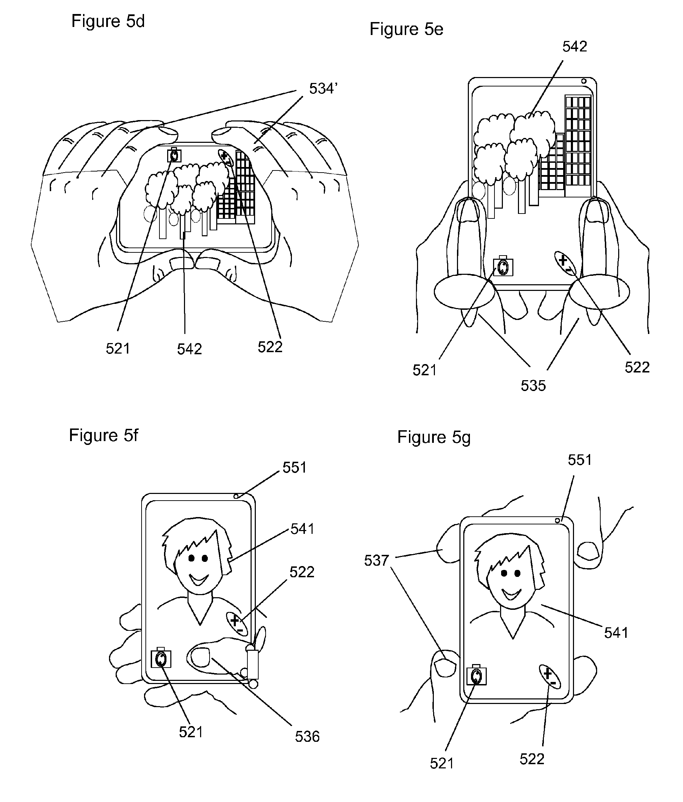

Then, as shown in figure 5d, the user adjusts his grip 534' to better hold the device. In particular, the user moves his hands towards each other. In this case, the device is configured to detect that the user's grip has changed, although it remains a two-handed landscape rear grip. Because it remains a two-handed landscape rear grip, the device is configured to remain using the rear-facing camera in landscape mode. However, the apparatus, in this case, is configured to adjust the position of the control user interface elements. In particular, the apparatus is configured to move the 'capture photograph' and 'zoom settings' user interface elements 521, 522 such that they are not obscured by the user grip. This means that they remain accessible to the user. In this way, the mode of the camera prescribes at least one of the orientation and the position of one or more user interface element in a camera application used to interact with a said camera of the portable electronic device based on the particular determined user's grip.

The user then decides that the photo would be better in portrait mode. The user therefore changes his grip 535 in order to hold the device in a two-handed portrait front grip (shown in figure 5e). In this case, the apparatus/device determines that the user's grip is a front grip by detecting thumb contact on the front of the device 501. The device/apparatus is further configured to determine that it is a two-handed portrait grip by detecting that the thumbs of the left and right hands are placed on the opposite sides of the device and at the same ends.

As stated before, the particular camera mode which is activated is, in this case, based on the determined grip. In particular, in response to the determined user's grip 535 being a two-handed front grip (i.e. a reverse grip where the palms are on the opposite side as the screen), the apparatus/device is configured to continue using the rear-facing camera (i.e. in a rear-facing camera mode). In response to determining that the device is in a portrait grip, the device is configured to switch to a portrait mode. This means that the displayed icons (e.g. the capture image 521 and zoom 522 controls) are configured to appear upright to the user and in a position which are easily accessible to the user's thumbs. In this way, the mode of the camera prescribes at least one of the orientation and the position of user interface elements in a camera application used to interact with a said camera of the portable electronic device.

After the user has taken the desired image of the scenery by pressing the 'capture image' user interface element 521, he decides that he still would like to use the front-facing camera 551 in order to take a self portrait. The user therefore changes his grip in order to hold the device in a one-handed portrait front grip 536 (as shown in figure 5f). In this case, the apparatus/device determines that the user's grip 536 is a front grip by detecting thumb contact on the front of the device. The device/apparatus is further configured to determine that the user's grip 536 is a one handed portrait grip by detecting that the thumb of the right hand extends from the right of the device to the left of the device (left and right being defined with respect to the user when the device is in the upright portrait orientation).

As before, the particular camera mode which is activated is, in this case, based on the determined grip. In this case, the camera mode is activated based on one or more of the number of hands used in the grip, whether the grip is a front or rear grip; and whether the device is held in a portrait or a landscape grip. In particular, in response to the determined user's grip being a one-handed front grip (i.e. a normal grip where the palm is on the opposite side as the screen), the apparatus/device is configured to switch to the front-facing camera. In response to determining that the device is in a portrait grip, the device is configured to continue to use the portrait mode. This means that the icons displayed (e.g. the capture image 521 and zoom 522 controls) are configured to appear upright to the user.

The user wishes to hold the camera more stably and so decides to use a two-handed grip 537 (as shown in figure 5g). The user therefore changes his grip 537 in order to hold the device in a two-handed portrait front grip. In this case, the apparatus/device determines that the user's grip is a front grip by detecting contact from the palms on the rear of the device. The device/apparatus is further configured to determine that the user's grip is a two-handed portrait grip by detecting that the thumbs contact on opposite sides and on opposite ends of the device (c.f. figure 4d where the thumbs of a two-handed rear grip are at opposite ends but at the same side of the device). In this case, the apparatus/device is configured to change the position of the user interface elements 521, 522 in order to provide better access to the user.

It will be appreciated that providing for landscape and portrait modes based on the grip of the user may allow for more robust orientation of user interface elements when the device is on its side (e.g. when the user is using the device lying down or when the device is placed on a horizontal surface).

In the above examples, the camera modes provide for switching between a front-facing camera and a rear-facing camera. It will be appreciated that other example embodiments may have camera modes configured to allow multiple cameras to be active simultaneously (i.e. by having both a front-facing camera and a rear-facing camera on, or active, at the same time). For example, the rear-facing camera could be configured to capture an image of scenery and a front-facing camera could be configured to capture a corresponding image of the user in order to combine the two images to form a single composite image.

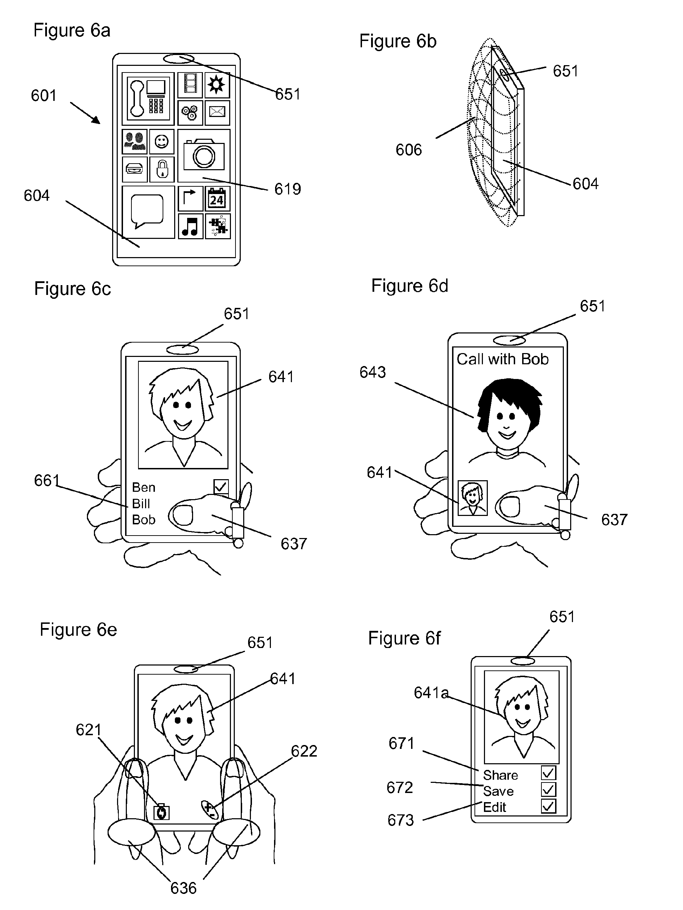

Figures 6a-6d illustrate an example of a portable electronic device 601 such as a smartphone. The portable electronic device 601 may be the apparatus or may comprise the apparatus. In figure 6a, the user is not holding the device, and the device is displaying the home screen. The home screen comprises a number of tile user interface elements including a camera tile user interface element 619 which may be used to select camera functionality. In other embodiments, the home screen may comprise other discrete user interface elements, such as icons, rather than tiles. The device 601, in this case, comprises a front-facing camera 651 (configured to capture images of the user when the user is looking at the device display screen). In this case, the example embodiment is configured to allow the user to switch between different modes of the front-facing camera 651 in order to use different front-facing camera applications.

Figure 6b illustrates the way in which the user's grip is detected in this case. The apparatus/device 604 is shown from the side with a display/user interface 604 facing to the viewers left. The apparatus/device 601 is configured to determine the user's grip using a 3-D capacitive sensing user interface. A 3-D capacitive sensing user interface may be considered to be 3-D map capable sensor technology, which can detect objects hovering within a predetermined distance within a capacitive field 606 of the display, to make 3-D capacitive heatmaps/scanning images. These images can be used to identify the shape and size and location of, for example, a hand grip in 3-D space within the detection field 606 (e.g. a 3D mesh). The predetermined working distance in which objects may be detected may be up to 3cm away from the surface of the display screen in certain examples. It will be appreciated that other example embodiments may have different predetermined working distances (e.g. between 1 and 4cm). This sensing technology is also able to sense and determine the position of a user's hand at a distance from the screen even if he is wearing gloves, thereby providing an advantage over, for example, a touch-sensitive screen which requires skin contact with the display screen.

The capacitive sensing technology may be called 3-D touch, hovering touch or touchless touch, and may comprise the capacitive display 604 of the device 601 in communication with a host computer/processor. Even in the case of a flat display (e.g., one which may be considered to have one exposed plane as the screen of the device 604), the capacitive field 606 can detect objects such as fingers and thumbs at the edges/sides of the device 601 and interface 604 as it can detect objects at a distance away from a direction perpendicular to the exposed plane. Thus, a user's hand grip may readily be identified, because the user's palm, fingers and thumb may be detectable by the capacitive field 606 even if they are at the edges and even at the back of the device 601. In certain examples, the 3-D capacitive sensor need not be part of a display screen 604, and may be integrated at any place of the device 601, such as at the sides or on the back.

When a user grips a device 601 with such a 3-D capacitive sensing user interface 606, the capacitive field 606 changes. Touch controller algorithms can detect the user's hand position in relation to the display 604 from changes in the capacitive field 606. Another method is to transfer capacitive raw data to a host computer/processor from the apparatus/device 601 and run a hand detection algorithm at the host. The capacitive raw data information can be transferred to the host from a touch controller interface of the apparatus/device 601.

In this case, the user initially wishes to use the device to video call his friend. In this case, the apparatus/device 601 is configured to control the mode of at least one camera of a portable electronic device based on a determined user's grip of the portable electronic device. In this case, the mode of the application prescribes which application is used to interact with the camera. This example embodiment has two camera applications: an image capture application configured to allow the user to capture photographic images; and a video call application configured to allow the user to hold a video conversation with a friend (e.g. via the internet or telephone network).

To initiate the video call application, the user selects the camera tile user interface element 619 and holds the device 601 in a one-handed grip 637 (the one handed grip in this case being associated with the video call application mode in this case). In this case, the apparatus/device determines that the user's grip 637 is a one-handed grip by detecting the thumb of the right hand in front of the screen.

The particular camera mode which is activated is, in this case, based on the determined grip 637. In this case, the camera mode is activated based on the number of hands used in the grip. In particular, in response to the determined user's grip being a one-handed grip, the apparatus/device is configured to initiate the (front-facing) camera 651 using the video call application. When the video call camera application mode is initiated, the screen is configured to display a list of contacts 661 which the user can select to call. The screen is also configured to display a live image 641 of the user captured using the front-facing camera.

In this case, the user wishes to call his friend 'Bob' and so he selects the corresponding contact from the displayed list of contacts 661. In response to the user selecting a contact a call is initiated to the selected contact. When the call has been accepted, the device is configured to display a large live image of his friend 643, and a small live image of the user 641 captured using the portable electronic device's front-facing camera 651.

After the call is completed, the user wishes to use the device 601 to take a photograph of himself.

The user therefore initiates the camera function (by navigating to the home screen as shown in figure 6a and selecting the camera tile user interface element 619) and holds the device in a two-handed grip 636 (as shown in figure 6e). In this case, the apparatus/device 601 determines that the user's grip 636 is a two-handed grip by detecting the thumbs of the right and left hands in front of the screen 604. In response to the determined user's grip being a two-handed grip, the apparatus/device is configured to initiate the front-facing camera using the image capture application (i.e. in an image capture mode). When the image capture application is initiated, the screen is configured to display a live image of the user 641 and a number of user interface elements including: a capture image icon 621 configured to allow the user to capture a still image; and zoom control 622 configured to allow the user to zoom the front-facing camera 651.

In this case, the user first composes the photo and then presses the capture image icon in order to take a photograph of himself. When the image has been captured, the device is configured to display the captured photo 641a, and a number of options to allow the user to share the captured photo 671; to save the photo, 672 or to edit the photo 673.

In figures 4a-4d, 5a-5g, and 6a-6f, for example, while it is shown that the apparatus/device 401, 501, 601 is being held in the user's hand or hands, this need not be the case. The device may be laid on a tabletop or desk, for example, and the apparatus is still configured to use a determined user's grip of the portable electronic device as a user input to control data the mode of the camera. For example, a user may grip the device while the device is lying on the tabletop, and provide user input to control the mode of the camera. An example is of using an apparatus/device during a video call. The user may have an apparatus/device laid on the desk in front of him. To pause video (and audio) input he may hold the device to cover the front-facing camera thereby gripping it while it is still laid on the tabletop, and by later removing his grip, un-pause video (and audio) and continue the conversation.

In general, the apparatus is configured to provide functionality as disclosed herein to a wide range of devices, including portable electronic devices such as mobile telephones, personal digital assistants, tablet computers, desktop computers, e-books, personal media players, servers, microphones, speakers, displays, cameras, or module for one or more of the same. Another example is of a personal communicator with a flip cover, in which the apparatus is configured to operate whether the flip cover is closed or open (the device may comprise sensing elements over the front of the flip cover to operate when the cover is closed, and sensing elements over a display screen which is exposed when the flip cover is opened). Another example is of a bendable/flexible device, in which the sensing elements are configured to detect the position of a user's grip while accounting for the current position of the current bent/flexed configuration of the device.

Other examples include devices comprising grip sensing elements located on more than one, or all, sides of a device for a complete sensing field in 3-D around the device. Other devices comprise grip sensing elements over one side of a device, such as a side including a display screen. Further devices may not have a display screen, and grip sensing elements may still be present to allow a user to provide user inputs and obtain data streaming control as disclosed herein. In examples where there is no display screen per se, an indicator light or lights, audio feedback and/or haptic feedback may be implemented to alert the user to any detected user inputs.

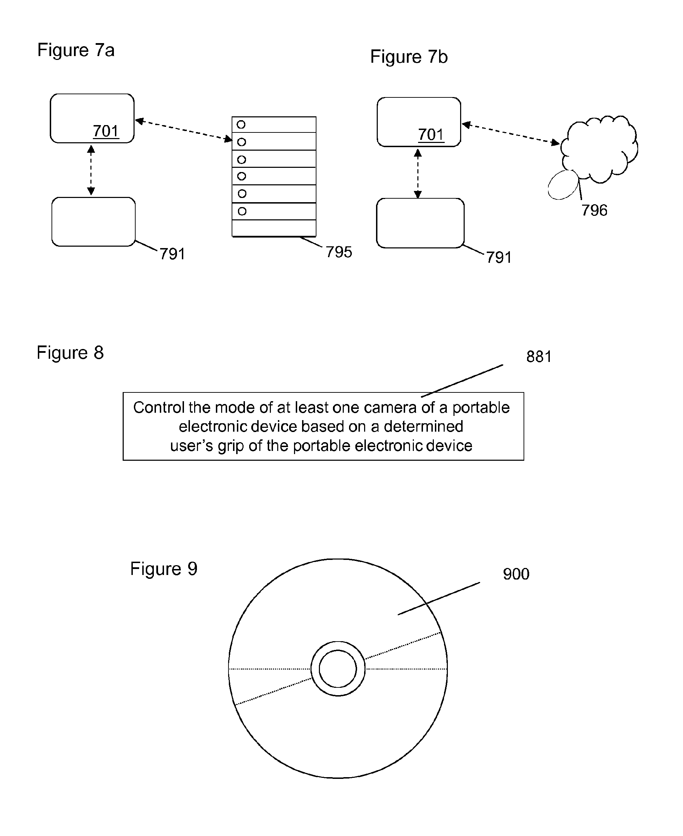

Figure 7a shows an example of an apparatus in communication with a remote server. Figure 7b shows an example of an apparatus in communication with a "cloud" for cloud computing. Such communication with a remote computing element may be via a communications unit, for example. In figures 7a and 7b, the apparatus 701 (which may be apparatus 101, 201 or 301) is in communication with another device 791, such as a display, microphone, speaker, or camera. Of course, the apparatus 701 and device 791 may form part of the same apparatus/device, although they may be separate as shown in the figures.

Figure 7a shows the remote computing element to be a remote server 795, with which the apparatus may be in wired or wireless communication (e.g. via the internet, Bluetooth, a USB connection, or any other suitable connection as known to one skilled in the art). In figure 7b, the apparatus 701 is in communication with a remote cloud 796 (which may, for example, by the Internet, or a system of remote computers configured for cloud computing). A portable electronic device may be configured to download data from a remote server 795 or a cloud 796. The determination of the grip may be performed by the service 795/cloud 796. In other embodiments, the server 795/cloud 796 may control the mode of at least one camera of a portable electronic device as disclosed herein.

A user may use a determined user grip as input to configure, for example, the device to use a particular camera mode. For example, a user may be shown figures showing pre-defined specific detectable grips which can then be user associated with respective camera modes. On other cases, the user may define their own specific grips.

Figure 8 illustrates a method according to an example embodiment of the present disclosure. The method comprises controlling 881 the mode of at least one camera of a portable electronic device based on a determined users grip of the portable electronic device.

Figure 9 illustrates schematically a computer/processor readable medium 900 providing a program according to an embodiment. In this example, the computer/processor readable medium is a disc such as a Digital Versatile Disc (DVD) or a compact disc (CD). In other embodiments, the computer readable medium may be any medium that has been programmed in such a way as to carry out the functionality herein described. The computer program code may be distributed between the multiple memories of the same type, or multiple memories of a different type, such as ROM, RAM, flash, hard disk, solid state, etc.

Any mentioned apparatus/device/server and/or other features of particular mentioned apparatus/device/server may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some embodiments, a particular mentioned apparatus/device/server may be pre-programmed with the appropriate software to carry out desired operations, and wherein the appropriate software can be enabled for use by a user downloading a "key", for example, to unlock/enable the software and its associated functionality. Advantages associated with such embodiments can include a reduced requirement to download data when further functionality is required for a device, and this can be useful in examples where a device is perceived to have sufficient capacity to store such pre-programmed software for functionality that may not be enabled by a user.

Any mentioned apparatus/elements/processor may have other functions in addition to the mentioned functions, and that these functions may be performed by the same apparatus/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some embodiments one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/embodiments may consist of any such individual feature or combination of features. In view of the foregoing description it will be evident to a person skilled in the art that various modifications may be made within the scope of the disclosure.

While there have been shown and described and pointed out fundamental novel features as applied to example embodiments thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or embodiments may be incorporated in any other disclosed or described or suggested form or embodiment as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus comprising:
a processor; and
a memory including computer program code,
the memory and the computer program code configured, with the processor, to cause the apparatus to perform at least the following:
control the mode of at least one camera of a portable electronic device based on a determined user's grip of the portable electronic device.

2. The apparatus of claim 1, wherein the apparatus is configured to use the determined user's grip to switch between a plurality of cameras of the portable electronic device.

3. The apparatus of claim 1 or claim 2, wherein the apparatus is configured to use the determined user's grip to switch between a front-facing camera and a rear-facing camera of the portable electronic device or between front and rear-facing image capture modes of the camera.

4. The apparatus of any preceding claim, wherein the mode of said camera is a portrait or landscape mode of image capture, and the determined grip controls whether the image captured by the camera is a portrait image or a landscape image.

5. The apparatus of any preceding claim, wherein the mode of a said camera prescribes whether the camera is on, off or paused such that the determined grip controls turning the camera on or off or pausing the camera.

6. The apparatus of any preceding claim, wherein the apparatus is configured to use the determined user's grip to control currently active camera functionality provided using the portable electronic device.

7. The apparatus of any preceding claim, wherein the apparatus is configured:
to enable a rear-facing camera mode in response to determining that the user's grip of the portable electronic device is a rear grip; and
to enable a front-facing camera mode in response to determining that the user's grip of the portable electronic device is a front grip.

8. The apparatus of any of claims 1 to 7, wherein the apparatus is configured:
to enable a rear-facing camera mode in response to determining that the user's grip of the portable electronic device is a two-handed grip; and
to enable a front-facing camera mode in response to determining that the user's grip of the portable electronic device is a one-handed grip.

9. The apparatus of any preceding claim, wherein the apparatus is configured: to re-position one or more user interface elements on a display such that the one or more user interface elements are not obscured by the determined user's grip.

10. The apparatus of any preceding claim, wherein the user's grip is determined using one or more of:
a 3-D capacitive sensing user interface;
a pressure detecting user interface; and
a touch sensitive user interface.

11. The apparatus of any preceding claim, wherein the apparatus is configured, in response to determining that the user's grip obscures at least one camera and leaves at least one camera uncovered, to activate a said uncovered camera.

12. The apparatus of any preceding claim, wherein the apparatus is configured to allow a user of the portable electronic device to calibrate the apparatus by:
storing one or more user grip positions on the portable electronic device; and
associating a particular user grip position with a mode of a said camera.

13. The apparatus of any preceding claim, wherein the camera mode prescribes which particular camera application is used to interact with a said camera.

14. A computer program comprising computer program code configured to:
control the mode of at least one camera of a portable electronic device based on a determined user's grip of the portable electronic device.

15. A method comprising:
controlling the mode of at least one camera of a portable electronic device based on a determined user's grip of the portable electronic device.
